# EUROPEAN PATENT SPECIFICATION

(11) **EP 1 847 702 B1**
(45) Date of publication and mention of the grant of the patent: **07.11.2018**
(21) Application number: 07008150.0
(22) Date of filing: 20.04.2007
(51) Int. Cl.: F02D 25/00, F02D 11/10

(54) **Drive system, control method therefor, and computer program therefor**
Antriebssystem sowie Steuerverfahren und Computerprogramm dafür
Système de commande, son procédé de contrôle et programme informatique correspondant

(30) Priority: 21.04.2006 JP 2006117759
(43) Date of publication of application: 24.10.2007
(73) Proprietor: Yamaha Hatsudoki Kabushiki Kaisha, Shizuoka-ken Shizuoka 438-8501 (JP)
(72) Inventor: Okuyama, Takashi, Hamamatsu-shi Shizuoka-ken (JP); Kanno, Isao, Hamamatsu-shi Shizuoka-ken (JP)
(74) Representative: Grünecker Patent- und Rechtsanwälte PartG mbB

(56) References cited:
- WO-A1-2004/074032
- DE-A1- 4 406 088
- US-A- 4 708 669
- US-A1- 2004 069 271

## Description

The present invention relates to a drive system according to the preamble of independent claim 1, to a control method for a propulsion drive system according to the preamble of independent claim 11, to a boat and to a software program for such a drive system. Such a drive system and control method can be taken from US 4,708,669. In particular, it is discussed a remote control system of an internal combustion engine to maintain a continuous running and operation stability of a boat by reducing a rotational speed of an internal combustion engine in another normally operating propulsion unit when an abnormality such as overheating and oil reduction occurs to one of internal combustion engines in a plurality of propulsion units installed to a boat, and a boat equipped with the remote control system.

The prior art document US 4,708,669 A refers to a warning device for a watercraft provided with a plurality of marine propulsion engines, wherein the respective engine control units are connected with each other. A signal concerning abnormal running condition in one engine is directly transmitted to the control unit of a normal operating engine and the speed of both engines is reduced in case abnormal operating condition is detected in one of the engines.

When an abnormality occurs in an internal combustion engine in any propulsion unit on a boat equipped with a plurality of propulsion units, there is a case where a control is conducted to reduce a rotational speed of an internal combustion engine having caused an abnormality to prevent an overheat of the internal combustion engine. If an internal combustion engine in a normal propulsion unit is operated in the same state, there may be a case where rotational speeds of a normal internal combustion engine and an abnormal internal combustion engine become unbalanced and operation stability is deteriorated.

When an attempt is made to reduce a rotational speed of an abnormal internal combustion engine, there may be a case where a propeller of the internal combustion engine is forcefully rotated by a water flow, so that a speed is not reduced to a target low speed.

Conventionally, a control system that reduces both of a rotational speed of an internal combustion engine having caused an abnormality and a rotational speed of a normally operating other internal combustion engine is proposed, which an abnormality detecting means, when an abnormality occurs in an internal combustion engine in any propulsion unit of two propulsion units, detects an abnormality to reduce a rotational speed of an internal combustion engine by operating an abnormality warning means installed to an internal combustion engine having caused the abnormality, while an abnormality warning means installed to a normally operating internal combustion engine is operated to reduce a rotational speed of a normally operating internal combustion engine, preventing a forceful rotation (see Patent Document 1 for example).

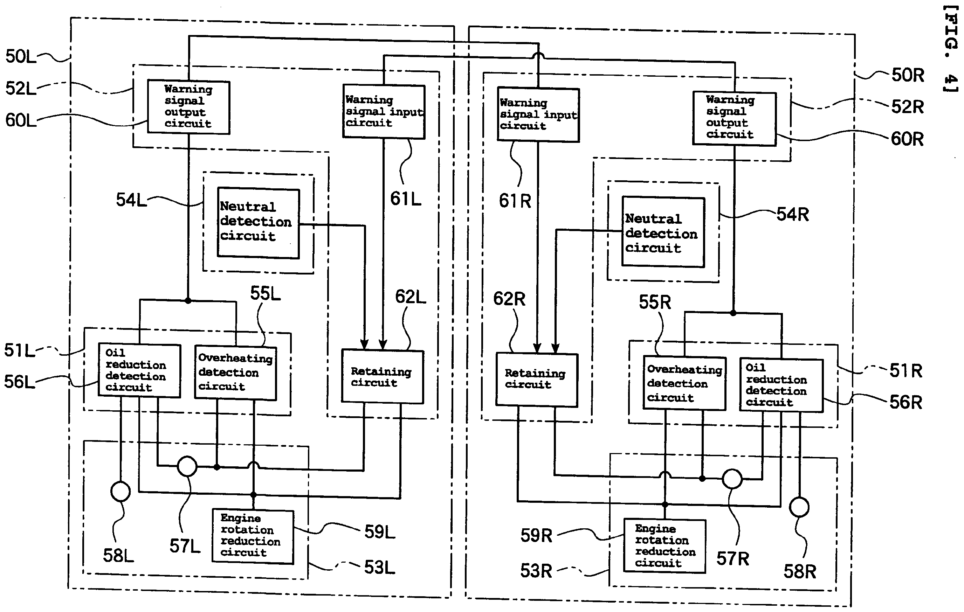

As illustrated in FIG. 4, the conventional control system of an internal combustion engine has the right side control system 50R to give a warning against an abnormality of an internal combustion engine in a right side propulsion unit and the left side control system 50L to give a warning against an abnormality of an internal combustion engine in a left side propulsion unit in a so-called mechanical type remote operation system with a propulsion unit and a remote control device connected by a connecting means such as a cable, and these control systems 50R and 50L include the abnormality detecting means 51R and 51L, the control means 52R and 52L, the abnormality warning means 53R and 53L, and the warning canceling means 54R and 54L.

The abnormality detecting means 51R and 51L include the overheating detection circuits 55R and 55L to detect overheating of an internal combustion engine and the oil reduction detection circuits 56R and 56L to detect oil reduction.

In addition, the abnormality warning means 53R and 53L include the buzzers 57R and 57L to give a warning when oil reduction or overheating is detected, the lamps 58R and 58L to give a warning when oil reduction is detected, and the engine rotation reduction circuits 59R and 59L to give a warning by reducing a rotational speed of an internal combustion engine when oil reduction or overheating is detected by these detection circuits.

Moreover, the control means 52R and 52L have the warning signal output circuits 60R and 60L to output a warning signal to give a warning to a an internal combustion engine side of the other propulsion unit based on an abnormality detecting signal from the overheating detection circuits 55R and 55L or the oil reduction detection circuits 56R and 56L. A warning signal output by these warning signal output circuits 60R and 60L is entered into the warning signal input circuits 61R and 61L on the other internal combustion engine side, and the state is retained in the retaining circuits 62R and 62L. This simultaneously operates the engine rotation reduction circuits 59R and 59L of an internal combustion engine in a normal propulsion unit, reducing a rotational speed of an internal combustion engine and operating the buzzers 57R and 57L to warn an operator.

For example, when an internal combustion engine in a right side propulsion unit is overheated or the amount of oil becomes smaller than a standard amount, the overheating detection circuits 55R detects overheating or the oil reduction detection circuits 56R detects oil reduction, and the buzzer 57R and the lamp 58R operate to inform an operator of an abnormality. If the overheating detection circuit 55R or the oil reduction detection circuits 56R operates, the operation signal is transmitted to the engine rotation reduction circuit 59R of an internal combustion engine in an abnormal right side compulsion system and the engine rotation reduction circuit 59L of an internal combustion engine in a normal left side compulsion system. The signal transmitted from the engine rotation reduction circuits 59R and 59L makes spark plugs of an internal combustion engine in an abnormal right side propulsion unit and of an internal combustion engine in a normal left side propulsion unit fail to cause an ignition, reducing a rotational speed of each internal combustion engine.

In some cases where a mechanical type remote operation system is used, each electronic control device connected to an internal combustion engine in a plurality of compulsion systems is connected to each other by a CAN (Controller Area Network) internationally standardized. When an abnormality occurs in an internal combustion engine in any of propulsion units, if an electronic control device connected to the abnormal internal combustion engine detects an abnormality, it makes a spark plug of its internal combustion engine fail to cause an ignition based on the abnormal signal, and the abnormal signal is transmitted to an electronic control device connected to the other normal internal combustion engine to make a spark plug of a normal internal combustion engine fail to cause an ignition, so that a rotational speed of each internal combustion engine is reduced.
Patent Document 1: JP-B-Hei 6-33074

The above are cases where a control system having of a dedicated circuit connected to an internal combustion engine of a propulsion unit is adopted and a control system connecting each electronic control device connected to an internal combustion engine in a plurality of propulsion units to each other by a CAN is adopted. They all are cases used for a mechanical type remote operation system with a propulsion unit and a remote control device connected by a mechanical cable, where a method is adopted to reduce a rotational speed of the internal combustion engine by making a spark plug of an internal combustion engine fail to cause an ignition.

However, because an expensive dedicated circuit is required for a case where a control system with a dedicated circuit connected to an internal combustion engine in a propulsion unit is adopted, this is a cause that increases a cost of a boat. In addition, the problem is that the control of reducing a rotational speed of an internal combustion engine by making a spark plug fail to cause an ignition is more difficult than a method that adjusts a throttle opening degree.

To solve problems caused by the above conventional control system of an internal combustion engine, an objective of the present invention is to provide a drive system and a control method as indicated above, as well as a boat comprising such a drive system and a software program for such a drive system that realize a high response control by a simple structure and surely reduce rotational speeds of an internal combustion engine in an abnormal propulsion unit and an internal combustion engine in a normal propulsion unit.

According to the present invention said object is solved by a drive system having the features of independent claim 1. Preferred embodiments are laid down in the dependent claims. Moreover, said object is also solved by a control method for a propulsion drive system of a boat having the features of independent claim 11. Furthermore, said object is also solved by a boat according to claim 10 and by a software program according to claim 12.

Accordingly, it is provided a drive system comprising multiple drive units, each drive unit having an internal combustion engine, and an electronic control unit, and a remote control device, wherein the electronic control units are configured to monitor a drive state of the respective engines, wherein a control unit detecting an abnormal operation state is configured to issue an abnormality signal to the remote control device, and to set an opening degree of the respective throttle of the engine being in the abnormal operating state to a preset small value, and wherein the remote control unit is configured to transmit the abnormality signal, or the preset small value for the throttle opening as a new target opening value to the electronic control units of the other normally operating engines to make the respective electronic control units to set the throttle opening degrees to the preset small value.

Preferably, the electronic control devices on an internal combustion engine side installed to each internal combustion engine are configured to control an operation of a throttle actuator of the respective internal combustion engine for each drive unit, an operation of a shift actuator, and an ignition timing of a spark plug of the engines.

Further, the remote control device comprises electronic control devices, which can communicate with each other, on a remote control device side corresponding to the same number of electronic control devices on the internal combustion engine side, and capable of transmitting a signal for each internal combustion engine to execute a target drive state.

Still further, preferably when an abnormality such as overheating and oil reduction in an internal combustion engine in any drive unit occurs, the electronic control device on the internal combustion engine side connected to the abnormally operating internal combustion engine is configured to detect the abnormality and to output the abnormality signal, to transmit a target throttle opening degree signal to the respective throttle actuator to set a throttle opening degree of the abnormally operating internal combustion engine to a certain small opening degree, and to transmit the abnormality signal to a corresponding electronic control device on the remote control device side of a normally operating internal combustion engine via the electronic control device on the remote control device side of an abnormally operating internal combustion engine, and wherein the electronic control device on a remote control device side of the normally operating internal combustion engine, on receiving the abnormality signal, transmits the target throttle opening degree signal or the abnormality signal to an electronic control device on the internal combustion engine side of the normally operating internal combustion engine, thereby, rotational speeds of an abnormally operating internal combustion engine and of the normally operating internal combustion engines are reduced to a certain low speed.

Yet further still, preferably the electronic control devices on the internal combustion engine side are having an actuator control device, respectively, to control an operation of a throttle actuator and an operation of a shift actuator and an engine control means to control an ignition timing of a spark plug, and when the actuator control device receives the abnormality signal, a target throttle opening degree corresponding to the target throttle opening degree signal and a throttle opening degree of an abnormally operating internal combustion engine are compared, and the throttle actuator is operated to change a throttle opening degree of an abnormally operating internal combustion engine to the target throttle opening degree if the two throttle opening degrees are different.

Preferably, when receiving the abnormality signal, an electronic control device on the remote control device side is configured to compare a target throttle opening degree and a throttle opening degree of a normally operating internal combustion engine, and, if the two throttle opening degrees are different, to transmit a target throttle opening degree signal to the actuator control device to set a throttle opening degree to the target throttle opening degree, so that the actuator control device operates the throttle actuator to change a throttle opening degree of a normally operating internal combustion engine to the target throttle opening degree.

Further, preferably when received the abnormality signal, an electronic control device on the remote control device side is configured to sound a warning buzzer installed to the remote control device or in the vicinity of it, and the target throttle opening degree signal is configured to control a rotational speed of an internal combustion engine.

Still further, preferably cancel conditions to cancel a restricted mode state of the throttle actuator having received the abnormality signal are a solution of an abnormality of an internal combustion engine causing the abnormality signal and the operation lever positioned in the neutral position or in a low speed position corresponding to a target throttle opening degree.

Yet further still, preferably the actuator control device is configured to operate the shift actuator to set a shift of an abnormally operating internal combustion engine to the neutral position based on the abnormality signal when having received the abnormality signal.

Preferably, the drive units are propulsion units, respectively comprising an internal combustion engine, installed to a boat.

Moreover, it is also provided a boat comprising a drive unit according to one of the above embodiments.

For the method aspect, it is provided a control method for a drive system, in particular for a propulsion drive system of a boat, said drive system comprising multiple drive units, each drive unit having an internal combustion engine, the method comprising the steps of: monitoring a drive state of each engine, to detect an abnormal operation of the engine, wherein upon detection of an abnormal operation in at least one of the engines the rotational speeds of all of the engines are set to a predetermined low value by adjusting the throttle opening degrees of the throttles of all of the engines.

Moreover, it is also provided a software program for a drive system according to one of the above embodiments, wherein the software program includes a throttle restriction module capable to executing control into the electronic control units of the internal combustion engines of the drive units to reduce a rotational speed of the internal combustion engine by adjusting a throttle opening degree.

With the present solution, there could be provided a boat equipped with the remote control system when an abnormality such as overheating and oil reduction occurs in one internal combustion engine in a plurality of propulsion units installed to a boat.

In the following, the present invention is explained in greater detail with respect to several embodiments thereof in conjunction with the accompanying drawings, wherein:
- FIG. 1: is a function block diagram of a remote control system of an internal combustion engine for a boat relating to an embodiment,
- FIG. 2: is a data flow diagram of an electronic control device on a remote control device side of a remote control system of an internal combustion engine for a boat relating to an embodiment,
- FIG. 3: is a state transition chart of a throttle restriction module of a remote control system of an internal combustion engine for a boat relating to an embodiment, and
- FIG. 4: is a function block diagram of a conventional control system of an internal combustion engine for a boat.

### Description of Reference Numerals and Symbols:

1R, 1L: operation lever
2: remote control device
3: remote control system
4P, 4C, 4S: electronic control device on an internal combustion engine side
5: electric throttle actuator
6: electric shift actuator
7: actuator control device
8: spark plug
9: internal combustion engine control device
10P, 10C, 10S: electronic control device on a remote control device side
11: communication circuit
13: warning buzzer
14: abnormal signal
15: target throttle opening degree signal

An embodiment will be hereinafter described in details with reference to the accompanying figures.

First, description will be given to a structure of an embodiment.

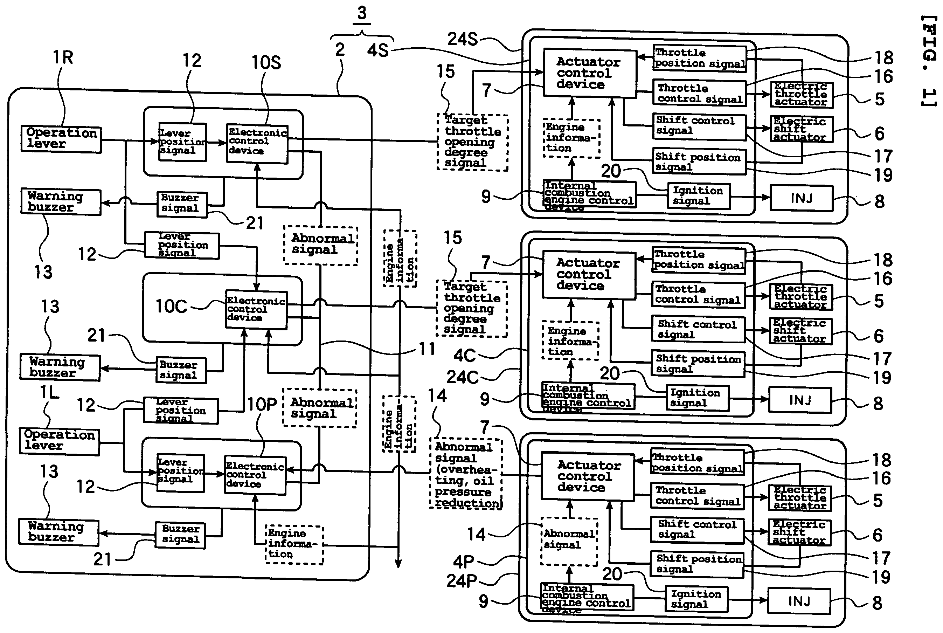

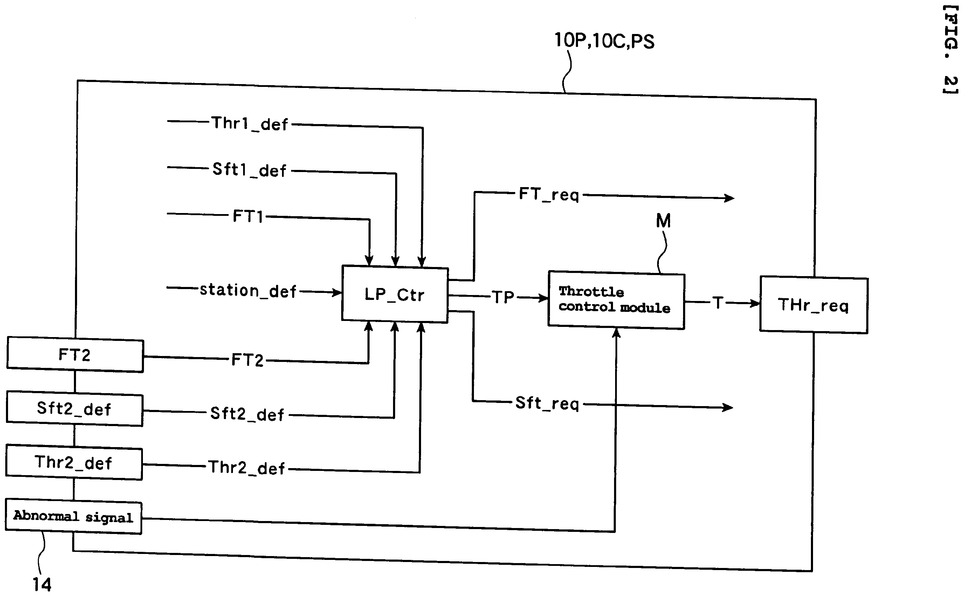

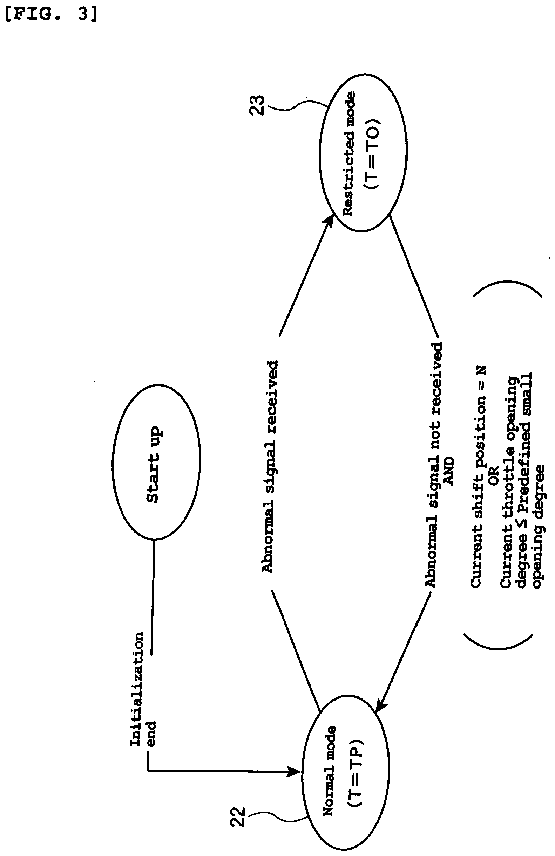

FIG. 1 illustrates a function block diagram of a remote control system of an internal combustion engine for a boat relating to an embodiment. FIG. 2 illustrates a data flow diagram of an electronic control device on a remote control device side of a remote control system of an internal combustion engine for a boat relating to an embodiment. FIG. 3 illustrates a state transition chart of a throttle restriction module of a remote control system of an internal combustion engine for a boat relating to an embodiment.

In FIG. 1, three propulsion units are installed to a boat, and the function block diagram shows the remote control system 3 equipped with the remote control device 2 capable of executing a remote control of a drive state of the three propulsion units with the two operation levers 1R and 1L. FIG. 1 illustrates the only remote control device 2 of a main console because a remote control device of a main console and a remote control device of an upper console can be switched for use when a boat is equipped with a main console and an upper console in a position higher than the main console, where a fine view is obtained, and one remote control device 2 is installed to each of the main console and the upper console.

From the upper right to the lower right in FIG. 1, the electronic control device 4S on an internal combustion engine side is installed to the starboard side propulsion unit 24S, the electronic control device 4C on an internal combustion engine side is installed to the center propulsion unit 24C, and the electronic control device 4P on an internal combustion engine side is installed on the port side propulsion unit 24P.

The electronic control devices 4S, 4C, and 4P on each internal combustion engine side have the actuator control device 7 to control an operation of the electric throttle actuator 5 that determines a drive state of an internal combustion engine of each of the propulsion units 24S, 24C, and 24P and an operation of the electric shift actuator 6 and the internal combustion engine control device 9 capable of controlling an ignition timing of the spark plug 8.

To the remote control device 2 installed to a main console, as many electronic control devices 10S, 10C, and 10P on a remote control device side as the corresponding electronic control devices 4S, 4C, and 4P on each internal combustion engine side are installed, and the electronic control devices 10S, 10C, and 10P on each remote control device side are connected via the communication circuit 11 by which a mutual communication is possible. In the embodiment, a CAN used for an automatic control of a vehicle is intentionally unused, and the communication circuit 11 and a dedicated communication protocol are adopted to prevent an intervention by other electric signals and to enhance reliability and response.

The electronic control devices 10S, 10C, and 10P on each remote control device side of the remote control device 2 are connected to the actuator control device 7 of the electronic control devices 4S, 4C, and 4P on each internal combustion engine side and the internal combustion engine control device 9.

The remote control device 2 is equipped with a lever position detector (not shown) to detect rotational operation positions of the operation levers 1R and 1L, and the operation state (the operation position) is detected by a lever position detector (now shown) constantly. The lever position signal 12 corresponding to the detected value is sent to the electronic control devices 4S, 4C, and 4P on an internal combustion engine side installed to an internal combustion engine of each of the propulsion units 24S, 24C, and 24P via the electronic control devices 10S, 10C, and 10P on a remote control device side. In addition, to the electronic control devices 10S, 10C, and 10P on each remote control device side of the remote control device 2, the warning buzzer 13 is connected to indicate an abnormality of an internal combustion engine in each of the propulsion units 24S, 24C, and 24P.

The electronic control device 10S, 10C, and 10P on each remote control device side of the remote control device 2 includes the throttle control module M that can output the target throttle opening degree signal 15 to the electronic control devices 4S, 4C, and 4P on an internal combustion engine side to operate the electric throttle actuator 5 of a normal internal combustion engine to change a rotational speed of another normal internal combustion engine to a certain low rotational speed with the target throttle opening degree TO when the abnormal signal 14 is received from the internal combustion engine control device 9 of the electronic control devices 4S, 4C, and 4P on an internal combustion engine side connected to an internal combustion engine causing an abnormality such as overheating or oil reduction as shown in FIG. 2.

The actuator control device 7 of the electronic control devices 4S, 4C, and 4P on each internal combustion engine side outputs the throttle control signal 16 to control an operation of the electric throttle actuator 5 according to an operation state (operation position) of the operation levers 1R and 1L and the shift control signal 17 to control an operation of the electric shift actuator 6. Operations of the electric throttle actuator 5 and the electric shift actuator 6 are constantly monitored by each position detecting sensor (not shown). As a result, the throttle position signal 18 corresponding to a throttle opening degree and the shift position signal 19 indicating a shift position such as going forward, in neutral, and going backward are sent to the actuator control device 7 as feedback.

The internal combustion engine control device 9 of the electronic control devices 4S, 4C, and 4P on each internal combustion engine side outputs the ignition signal 20 to execute an ignition of the spark plug 8 at an optimum timing programmed beforehand.

As described above, the electronic control devices 4S, 4C, and 4P on each internal combustion engine side realize a target shift position (forward, neutral, backward) corresponding to the operation state (operation position) and a rotational speed of an internal combustion engine when the operation levers 1R and 1L are operated by a function of the actuator control device 7 and the internal combustion engine control device 9.

A process of an embodiment of the present teaching is now described.

For example, when an abnormality such as overheating or oil reduction occurs in an internal combustion engine installed to the port side propulsion unit 24P as shown in FIG. 1, the internal combustion engine control device 9 of the electronic control device 4P on an internal combustion engine side connected to the abnormal internal combustion engine detects an abnormality and outputs the abnormal signal 14 to the actuator control device 7.

The throttle opening degree T of an internal combustion engine installed to the normally operating propulsion unit 24P on the port side is set to the throttle opening degree TP as a result of an operation of the operation levers 1R and 1L. When an abnormality occurs, the actuator control device 7, on receiving the abnormal signal 14 from the internal combustion engine control device 9 of the electronic control device 4P on an internal combustion engine side connected to the abnormal internal combustion engine, compares the target throttle opening degree TO programmed beforehand, which sets a certain low rotational speed of an internal combustion engine, and the throttle opening degree T of an abnormal internal combustion engine in the port side propulsion unit 24, which is obtained from the internal combustion engine control device 9. If the two throttle opening degrees are different, the electric throttle actuator 5 is operated to change the throttle opening degree T of an abnormal internal combustion engine in the port side propulsion unit 24P to the target throttle opening degree TO. In this case, a desirable predefined low rotational speed is the rotational speed of 600 to 1500 rpm used for an idling because an engine sound is minimized and an operator does not fail to notice a warning sound of the warning buzzer 13.

When the abnormal signal 14 output by the internal combustion engine control device 9 of the electronic control device 4P on an internal combustion engine side connected to an abnormal internal combustion engine in the port side propulsion unit 24P is received by the electronic control device 10P on a remote control device side connected to the internal combustion engine control device 9 of the electronic control device 4P on an internal combustion engine side of an abnormal internal combustion engine in the port side propulsion unit 24P, the electronic control devices 10C and 10S on another remote control device side in a state capable of mutually communicating with the electronic control device 10P on a remote control device side via the communication circuit 11 also receive the abnormal signal 14 simultaneously. This enables the electronic control device 10P on a remote control device side connected to the internal combustion engine control device 9 of the electronic control device 4P on an internal combustion engine side of an abnormal internal combustion engine in the port side propulsion unit 24P to output the buzzer signal 21, and the warning buzzer 13 corresponding to an abnormal internal combustion engine in the port side propulsion unit 24P makes a sound to inform an operator of an occurrence of an abnormality such as overheating and oil reduction in an internal combustion engine installed to the port side propulsion unit 24P.

When receiving the abnormal signal 14 via the electronic control device 10P on a remote control device side connected to an abnormal internal combustion engine in the port side propulsion unit 24P, the electronic control devices 10C and 10S on another remote control device side compares the target throttle opening degree TO programmed beforehand, which sets a certain low rotational speed of 600 to 1500 rpm for an internal combustion engine, and the throttle opening degree TP of a normal internal combustion engine obtained from the internal combustion engine control device 9 of the electronic control devices 4C and 4S on an internal combustion engine side connected to a normal internal combustion engine. If the two throttle opening degrees are different, the target throttle opening degree signal 15 is transmitted to the actuator control device 7 of the electronic control devices 4C and 4S on an internal combustion engine side connected to a normal internal combustion engine to set the throttle opening degree T to the target throttle opening degree T0. When receiving the target throttle opening degree signal 15, the actuator control device 7 operates the electric throttle actuator 5 to change the throttle opening degree T of a normal internal combustion engine to the target throttle opening degree T0.

As described above, a remote control system of an internal combustion engine for a boat relating to an embodiment of the present teaching realizes a method to reduce rotational speeds of an abnormal internal combustion engine and a normal internal combustion engine to a certain low rotational speed by simply and surely adjusting a throttle opening degree. In addition, this is realized by a simple modification of a software program to include the throttle restriction module M capable of executing such control into the existing electronic control devices 10S, 10C, and 10P on a remote control device side. Because a conventional expensive dedicated circuit to realize a complicated ignition failure control is not required, a cost of adopting a new control method is reduced. Moreover, as the electronic control devices 10S, 10C, and 10P on each remote control device side are connected with each other by the communication circuit 11 and a dedicated communication protocol is adopted, reliability and response are enhanced. Therefore, rotational speeds of an internal combustion engine in an abnormal propulsion unit and an internal combustion engine in a normal propulsion unit are reduced promptly and surely.

After an abnormality of an internal combustion engine is solved, the remote control system 3 of an internal combustion engine for a boat relating to an embodiment needs to be returned to the normal mode 22, which is a normal drive state. In an embodiment, the cancel conditions to cancel a state of the restricted mode 23 of the electric throttle actuator 5 having received the abnormal signal 14 are a solution of a abnormality of an internal combustion engine causing the abnormal signal 14 and the operation levers 1R and 1L positioned in the neutral position or in a position corresponding to a target throttle opening degree.

When receiving the abnormal signal 14 from the internal combustion engine control device 9, the actuator control device 7 controls the electric shift actuator 6 to set a shift position of an abnormal internal combustion engine in neutral based on the abnormal signal 14. This surely prevents a forceful rotation from damaging an internal combustion engine by inhibiting a transmission of a rotation of an internal combustion engine to a screw.

For a boat equipped with the remote control system 3 of an internal combustion engine for a boat relating to an embodiment of the present teaching, a simple and sure control to reduce a rotational speed of an internal combustion engine by adjusting a throttle opening degree is realized by a simple modification of software programs of the electronic control devices 4P, 4C, and 4S on an internal combustion engine side and the electronic control devices 10S, 10C, and 10P on a remote control device side. Therefore, because a conventional expensive dedicated circuit to realize a complicated ignition failure control is not required, a cost of adopting a new control method can be reduced. In addition, as it is simple to connect the electronic control devices 10S, 10C, and 10P on each remote control device side with each other via the communication circuit 11 and to adopt a dedicated communication protocol, reliability and response are enhanced. As a result, rotational speeds of an internal combustion engine in an abnormal propulsion unit and of an internal combustion engine in a normal propulsion unit are reduced promptly and surely.

The description above discloses (amongst others), in order to solve the problems above, according to a preferred first aspect, a remote control system of an internal combustion engine for a boat comprising: an electronic control device on an internal combustion engine side installed to each internal combustion engine for controlling an operation of a throttle actuator of an internal combustion engine for each propulsion unit, an operation of a shift actuator, and an ignition timing of a spark plug of a boat equipped with a plurality of propulsion unit; and a remote control device having electronic control devices, which can communicate with each other, on a remote control device side corresponding to the same number of electronic control devices on the internal combustion engine side and capable of transmitting a signal for each internal combustion engine to execute a target drive state; wherein when an abnormality such as overheating and oil reduction in an internal combustion engine in any propulsion unit occurs, an electronic control device on the internal combustion engine side connected to an abnormal internal combustion engine detects the abnormality and outputs an abnormal signal, transmitting a target throttle opening degree signal to the throttle actuator to set a throttle opening degree of an abnormal internal combustion engine to a certain small opening degree; and the abnormal signal is transmitted to an electronic control device on the remote control device side of a normal internal combustion engine via an electronic control device on the remote control device side of an abnormal internal combustion engine, and an electronic control device on a remote control device side of a normal internal combustion engine, on receiving the abnormal signal, transmits the target throttle opening degree signal or the abnormal signal to an electronic control device on the internal combustion engine side of a normal internal combustion engine, thereby, rotational speeds of an abnormal internal combustion engine and a normal internal combustion engine are reduced to a certain low speed.

Besides a structure described in the embodiment of the preferred first aspect, the description discloses a preferred second aspect in which an electronic control device on the internal combustion engine side has an actuator control device to control an operation of a throttle actuator and an operation of a shift actuator and an engine control means to control an ignition timing of a spark plug; when receiving the abnormal signal from the engine control means, the actuator control device compares a target throttle opening degree corresponding to the target throttle opening degree signal and a throttle opening degree of an abnormal internal combustion engine, and, if the two throttle opening degrees are different, the throttle actuator is operated to change a throttle opening degree of an abnormal internal combustion engine to the target throttle opening degree.

Besides a structure described in the embodiment of the preferred first aspect, the description discloses, in a preferred third aspect, that when receiving the abnormal signal, an electronic control device on the remote control device side compares a target throttle opening degree and a throttle opening degree of a normal internal combustion engine, and, if the two throttle opening degrees are different, a target throttle opening degree signal is transmitted to the actuator control device to set a throttle opening degree to the target throttle opening degree, so that the actuator control device operates the throttle actuator to change a throttle opening degree of a normal internal combustion engine to the target throttle opening degree.

Besides a structure described in the embodiments of the preferred first to third aspects, the description discloses, in a preferred fourth aspect, that when receiving the abnormal signal, an electronic control device on the remote control device side sounds a warming buzzer installed to the remote control device or in the vicinity of it, and the target throttle opening degree signal is to control a rotational speed of an internal combustion engine. Besides a structure described in the embodiments of the preferred first to fourth aspects, the description discloses, in a preferred fifth aspect, that the cancel conditions to cancel a restricted mode state of the throttle actuator having received the abnormal signal are a solution of an abnormality of an internal combustion engine causing the abnormal signal and the operation lever positioned in the neutral position or in a low speed position corresponding to a target throttle opening degree.

Besides a structure described in the embodiments of the preferred second to third aspects, the description, in a preferred sixth aspect, discloses that when receiving the abnormal signal from the engine control means, the actuator control device operates the shift actuator to set a shift of an abnormal internal combustion engine to the neutral position based on the abnormal signal.

A boat relating to the above aspects is described, as a preferred seventh aspect, in which a remote control system of an internal combustion engine for a boat described in one of the first to sixth aspects is installed.

### Effect of the Embodiments:

In the embodiment having the structure described in the preferred first aspect, an electronic control device on an internal combustion engine side connected to an abnormal internal combustion engine detects an abnormality and outputs an abnormal signal, a target throttle opening degree signal to set a throttle opening degree of an abnormal internal combustion engine to a certain small opening degree is transmitted to the throttle actuator, an abnormal signal is transmitted to an electronic control device on the remote control device side of a normal internal combustion engine via an electronic control device on a remote control device side of an abnormal internal combustion engine, and an electronic control device on a remote control device side of a normal internal combustion engine, on receiving an abnormal signal, transmits a target throttle opening degree signal or an abnormal signal to an electronic control device on an internal combustion engine side of a normal internal combustion engine, so that rotational speeds of an abnormal internal combustion engine and a normal internal combustion engine are reduced to a certain small degree. Therefore, a simple and sure control to reduce a rotational speed of an internal combustion engine by adjusting a throttle opening degree is realized by a simple modification of software programs of an electronic control device on an internal combustion engine side and an electronic control device on a remote control device side. As a result, because a conventional expensive dedicated circuit to realize a complicated ignition failure control is not required, a cost of adopting a new control method can be reduced. In addition, because it is easy to connect an electronic control device on each remote control device side to each other by a communication circuit and to adopt a dedicated communication protocol, reliability and response can be enhanced, so that rotational speeds of an internal combustion engine in an abnormal propulsion unit and of an internal combustion engine in a normal propulsion unit can be reduced promptly and surely.

In the embodiment described in the preferred second aspect, when an actuator control device receives an abnormal signal from a engine control means, a target throttle opening degree corresponding to a target throttle opening degree signal and a throttle opening degree of an abnormal internal combustion engine are compared, and, if the two throttle opening degrees are different, a throttle actuator is operated to change a throttle opening degree of an abnormal internal combustion engine to a target throttle opening degree. As a result, besides the effect of the preferred first aspect, a rotational speed of an abnormal internal combustion engine can be set more promptly and surely to a target low speed because the amount of intake air can be accurately controlled by adjusting a throttle opening degree of an abnormal internal combustion engine to a target value.

In the embodiment described in the preferred third aspect, when receiving an abnormal signal, an electronic control device on a remote control device side compares a target throttle opening degree and a throttle opening degree of a normal internal combustion engine and, if the two throttle opening degrees are different, transmits a target throttle opening degree signal to an actuator control device to set a throttle opening degree to a target throttle opening degree, so that an actuator control device operates a throttle actuator to change a throttle opening degree of a normal internal combustion engine to a target throttle opening degree. As a result, besides the effect of the preferred first aspect, a rotational speed of a normal internal combustion engine can be set more promptly and surely to a target low speed because the amount of intake air can be accurately controlled by adjusting a throttle opening degree of a normal internal combustion engine to a target value.

In the embodiment described in the preferred fourth aspect, when receiving an abnormal signal, an electronic control device on a remote control device side sounds a warning buzzer installed to a remote control device or in the vicinity of it, and a target throttle opening degree signal controls a rotational speed of an internal combustion engine. Therefore, because an engine sound is reduced to the lowest level, for example, by setting a low rotational speed used for an idling, an operator does not fail to notice a warning sound from a warning buzzer. Besides an effect described in one of the preferred first to third aspects, an action can be promptly taken to return an abnormal internal combustion engine to a normal state, so that damage to an internal combustion engine can be minimized.

In the embodiment described in the preferred fifth aspect, the cancel conditions to cancel a restricted mode state of a throttle actuator having received an abnormal signal are a solution of an abnormality of an internal combustion engine causing an abnormal signal and an operation lever positioned in the neutral position or in a low speed position corresponding to a target throttle opening degree. Besides an effect described in one of the preferred first to fourth aspects, when an abnormality of an internal combustion engine is solved and a normal mode is recovered, there is no fear that a boat accelerates unexpectedly.

In the embodiment described in the preferred sixth aspect, when receiving an abnormal signal from an engine control means, an actuator control device operates the shift actuator to set a shift of an abnormal internal combustion engine to the neutral position based on an abnormal signal. Besides an effect described in the preferred second or third aspects, because a rotation of an internal combustion engine is not transmitted to a screw, damage to an internal combustion engine caused by a forceful rotation is surely prevented.

The embodiment relating to a boat described in the preferred seventh aspect, includes a remote control system of an internal combustion engine for a boat described in any one of the preferred first to sixth aspects. Therefore, a simple and sure control to reduce a rotational speed of an internal combustion engine by adjusting a throttle opening degree is realized by a simple modification of software programs of an electronic control device on an internal combustion engine side and of an electronic control device on a remote control device side. As a result, because a conventional expensive dedicated circuit to realize a complicated ignition failure control is not required, a cost of adopting a new control method can be reduced. In addition, because it is easy to connect an electronic control device on each remote control device side to each other by a communication circuit and to adopt a dedicated communication protocol, reliability and response can be enhanced, so that rotational speeds of an internal combustion engine in an abnormal propulsion unit and of an internal combustion engine in a normal propulsion unit can be reduced promptly and surely.

The description further discloses, in order to provide a remote control system of an internal combustion engine that realizes a high response control by a simple structure and is capable of surely reducing rotational speeds of an internal combustion engine of an abnormal propulsion unit and of an internal combustion engine of a normal propulsion unit when an abnormality such as overheating and oil reduction occurs to one internal combustion engine in a plurality of propulsion units installed to a boat, a preferred embodiment of an electronic control device on an internal combustion engine side connected to an abnormal internal combustion engine detects an abnormality and outputs the abnormal signal 14; the target throttle opening degree signal 15 is transmitted to the electric throttle actuator 5 to set a throttle opening degree of an abnormal internal combustion engine to a certain small opening degree; the abnormal signal 14 is transmitted to the electronic control devices 10C and 10S on a remote control device side of a normal internal combustion engine; and the electronic control devices 10C and 10S on a remote control device side of a normal internal combustion engine, on receiving the abnormal signal 14, transmit the target throttle opening degree signal 15 to the electronic control devices 4C and 4S on an internal combustion engine side of a normal internal combustion engine.

As discussed above, according to a preferred first aspect, there is disclosed an embodiment of a remote control system of an internal combustion engine for a boat comprising: an electronic control device on an internal combustion engine side installed to each internal combustion engine for controlling an operation of a throttle actuator of an internal combustion engine for each propulsion unit, an operation of a shift actuator, and an ignition timing of a spark plug of a boat equipped with a plurality of propulsion unit; and a remote control device having electronic control devices, which can communicate with each other, on a remote control device side corresponding to the same number of electronic control devices on the internal combustion engine side and capable of transmitting a signal for each internal combustion engine to execute a target drive state; wherein when an abnormality such as overheating and oil reduction in an internal combustion engine in any propulsion unit occurs, an electronic control device on the internal combustion engine side connected to an abnormal internal combustion engine detects the abnormality and outputs an abnormal signal, transmitting a target throttle opening degree signal to the throttle actuator to set a throttle opening degree of an abnormal internal combustion engine to a certain small opening degree; and the abnormal signal is transmitted to an electronic control device on the remote control device side of a normal internal combustion engine via an electronic control device on the remote control device side of an abnormal internal combustion engine, and an electronic control device on a remote control device side of a normal internal combustion engine, on receiving the abnormal signal, transmits the target throttle opening degree signal or the abnormal signal to an electronic control device on the internal combustion engine side of a normal internal combustion engine, thereby, rotational speeds of an abnormal internal combustion engine and a normal internal combustion engine are reduced to a certain low speed.

The description further discloses, according to a preferred second aspect, an embodiment of a remote control system of an internal combustion engine for a boat according to the first aspect, wherein an electronic control device on the internal combustion engine side has can actuator control device to control an operation of a throttle actuator and an operation of a shift actuator and an engine control means to control an ignition timing of a spark plug; and when the actuator control device receives the abnormal signal from the engine control means, a target throttle opening degree corresponding to the target throttle opening degree signal and a throttle opening degree of an abnormal internal combustion engine are compared, and the throttle actuator is operated to change a throttle opening degree of an abnormal internal combustion engine to the target throttle opening degree if the two throttle opening degrees are different.

The description further discloses, according to a preferred third aspect, an embodiment of a remote control system of an internal combustion engine for a boat according to the first aspect, wherein when receiving the abnormal signal, an electronic control device on the remote control device side, compares a target throttle opening degree and a throttle opening degree of a normal internal combustion engine, and, if the two throttle opening degrees are different, transmits a target throttle opening degree signal to the actuator control device to set a throttle opening degree to the target throttle opening degree, so that the actuator control device operates the throttle actuator to change a throttle opening degree of a normal internal combustion engine to the target throttle opening degree.

The description further discloses, according to a preferred fourth aspect, an embodiment of a remote control system of an internal combustion engine for a boat according to any one of the first to third aspects, wherein when received the abnormal signal, an electronic control device on the remote control device side sounds a warning buzzer installed to the remote control device or in the vicinity of it, and the target throttle opening degree signal controls a rotational speed of an internal combustion engine.

The description further discloses, according to a preferred fifth aspect, an embodiment of a remote control system of an internal combustion engine for a boat according to any one of the first to fourth aspects, wherein the cancel conditions to cancel a restricted mode state of the throttle actuator having received the abnormal signal are a solution of an abnormality of an internal combustion engine causing the abnormal signal and the operation lever positioned in the neutral position or in a low speed position corresponding to a target throttle opening degree.

The description further discloses, according to a preferred sixth aspect, an embodiment of a remote control system of an internal combustion engine for a boat according to the second or third aspect, wherein the actuator control device operates the shift actuator to set a shift of an abnormal internal combustion engine to the neutral position based on the abnormal signal when having received the abnormal signal from the engine control means.

The description further discloses, according to a preferred seventh aspect, an embodiment of a boat comprising a remote control system of an internal combustion engine for a boat according to any one of the first to sixth aspects.

## Claims

1. Drive system comprising:
multiple drive units, each drive unit having an internal combustion engine, and an electronic control device (4S,4C,4P); and
a remote control device (2) capable of transmitting a signal for each internal combustion engine to execute a target drive state,
wherein the electronic control devices (4S,4C,4P) on an internal combustion engine side are configured to monitor a drive state of the respective engines,
wherein the control devices (4S,4C,4P) are configured to detect an abnormal operation state, to issue an abnormality signal (14), and to set an opening degree of the respective throttle of the engine being in the abnormal operating state to a preset small value (T0), wherein the abnormality signal (14) is transmitted to the electronic control devices (4S,4C,4P) of the other normally operating engines to make the respective electronic control devices (4S,4C,4P) to set the throttle opening degrees to the preset small value (T0), **characterized in that**
the remote control device (2) comprises electronic control devices (10S,10C,10P), which can communicate with each other, on a remote control device side corresponding to the same number of electronic control devices (4S,4C,4P) on the internal combustion engine side, and
the electronic control devices (4S,4C,4P) are configured to issue the abnormality signal (14) to the remote control device (2), wherein the remote control device (2) is configured to transmit the abnormality signal (14), or the preset small value (T0) for the throttle opening as a new target opening value to the electronic control devices (4S,4C,4P) of the other normally operating engines to make the respective electronic control devices (4S,4C,4P) to set the throttle opening degrees to the preset small value (T0).

2. Drive system according to claim 1, **characterized in that** the electronic control devices (4S,4C,4P) on an internal combustion engine side installed to each internal combustion engine are configured to control an operation of a throttle actuator (5) of the respective internal combustion engine for each drive unit, an operation of a shift actuator (6), and an ignition timing of a spark plug (8) of the engines.

3. Drive system according to claim 2, **characterized in that** the electronic control devices (4S,4C,4P) on the internal combustion engine side are having an actuator control device (7), respectively, to control the operation of the throttle actuator (5) and the operation of the shift actuator (6) and an engine control device (9) to control the ignition timing of a spark plug (8), and when the actuator control device (7) receives the abnormality signal (14), a target throttle opening degree corresponding to a target throttle opening degree signal (15) and a throttle opening degree of an abnormally operating internal combustion engine are compared, and the throttle actuator (5) is operated to change a throttle opening degree of an abnormally operating internal combustion engine to the target throttle opening degree if the two throttle opening degrees are different.

4. Drive system according to claim 3, **characterized in that,** when an abnormality such as overheating and oil reduction in an internal combustion engine in any drive unit occurs, the electronic control device (4S,4C,4P) on the internal combustion engine side connected to the abnormally operating internal combustion engine is configured to detect the abnormality and to output the abnormality signal (14), to transmit a target throttle opening degree signal (15) to the respective throttle actuator (5) to set a throttle opening degree of the abnormally operating internal combustion engine to a certain small opening degree, and to transmit the abnormality signal (14) to the corresponding electronic control device (10S,10C,10P) on the remote control device side of a normally operating internal combustion engine via the electronic control device (10S,10C,10P) on the remote control device side of an abnormally operating internal combustion engine, and wherein the electronic control device (10S,10C,10P) on a remote control device side of the normally operating internal combustion engine, on receiving the abnormality signal (14), transmits the target throttle opening degree signal (15) or the abnormality signal (14) to an electronic control device (4S,4C,4P) on the internal combustion engine side of the normally operating internal combustion engine, thereby, rotational speeds of an abnormally operating internal combustion engine and of the normally operating internal combustion engines are reduced to a certain low speed.

5. Drive system according to claim 3 or 4, **characterized in that** when receiving the abnormality signal (14), an electronic control device (10S,10C,10P) on the remote control device side is configured to compare a target throttle opening degree and a throttle opening degree of a normally operating internal combustion engine, and, if the two throttle opening degrees are different, to transmit a target throttle opening degree signal (15) to the actuator control device (7) to set a throttle opening degree to the target throttle opening degree, so that the actuator control device (7) operates the throttle actuator (5) to change a throttle opening degree of a normally operating internal combustion engine to the target throttle opening degree.

6. Drive system according to one of the claims 3 to 5, **characterized in that** when received the abnormality signal (14), an electronic control device (10S,10C,10P) on the remote control device side is configured to sound a warning buzzer (13) installed to the remote control device (2) or in the vicinity of it, and the target throttle opening degree signal (15) is configured to control a rotational speed of an internal combustion engine.

7. Drive system according to one of the claims 3 to 6, **characterized in that** cancel conditions to cancel a restricted mode state of the throttle actuator (5) having received the abnormality signal (14) are a solution of an abnormality of an internal combustion engine causing the abnormality signal (14) and the operation lever (1R,1L) positioned in the neutral position or in a low speed position corresponding to a target throttle opening degree.

8. Drive system according to one of the claims 3 to 7, **characterized in that** the actuator control device (7) is configured to operate the shift actuator (6) to set a shift of an abnormally operating internal combustion engine to the neutral position based on the abnormality signal (14) when having received the abnormality signal (14).

9. Drive system according to one of the claims 1 to 9, **characterized in that** the drive units are propulsion units (24S,24C,24P), respectively comprising an internal combustion engine, installed to a boat.

10. Boat comprising a drive system according to one of the claims 1 to 9.

11. Control method for a propulsion drive system of a boat, said drive system comprising multiple drive units, each drive unit having an internal combustion engine, and a remote control device (2) capable of transmitting a signal for each internal combustion engine to execute a target drive state, the method comprising the steps of:
monitoring a drive state of each engine,
detecting an abnormal operation state of one engine, to issue an abnormality signal (14),
setting an opening degree of a respective throttle of the engine being in the abnormal operating state to a preset small value (T0), wherein the abnormality signal (14) is transmitted to the other normally operating engines to set the throttle opening degrees to the preset small value (T0), **characterized by**
transmitting the abnormality signal (14) to the remote control device (2), and transmit the abnormality signal (14), or the preset small value (T0) for the throttle opening as a new target opening value by the remote control device (2) to the other normally operating engines to set the throttle opening degrees to the preset small value (T0).

12. Software program for a drive system according to one of the claims 1 to 9, **characterized in that** the software program includes a throttle restriction module (M) capable to executing control into the electronic control devices (4S,4C,4P) of the internal combustion engines of the drive units to reduce a rotational speed of the internal combustion engine by adjusting a throttle opening degree.

## Patentansprüche

1. Antriebs-System das umfasst:
mehrfache Antriebs-Einheiten, jede Antriebs-Einheit hat eine Brenn-Kraft-Maschine mit innerer Verbrennung, und eine Elektronik-Steuer -Vorrichtung (4S, 4C, 4P); und
eine Fern-Steuer-Vorrichtung (2), die in der Lage ist ein Signal für jede Brenn-Kraft-Maschine mit innerer Verbrennung zu übertragen, um einen Ziel-Antriebs-Zustand auszuführen,
wobei die Elektronik-Steuer-Vorrichtungen (4S, 4C, 4P) an einer Brenn-Kraft-Maschine mit innerer Verbrennungs-Seite konfiguriert sind, um einen Antriebs-Zustand der jeweiligen Maschinen zu überwachen,
wobei die Steuer-Vorrichtungen (4S, 4C, 4P) konfiguriert sind, um einen abnormalen Betriebs-Zustand zu erfassen, um ein Abnormalitäts-Signal (14) auszugeben, und einen Öffnungsgrad der jeweiligen Drossel der Maschine, die in dem abnormalen Betriebs-Zustand ist, auf einen vorhergesetzten kleinen Wert (T0) zu setzen, wobei das Abnormalitäts-Signal (14) zu den Elektronik-Steuer-Vorrichtungen (4S, 4C, 4P) von den anderen normal arbeitenden Maschinen übertragen wird, um die jeweiligen Elektronik-Steuer-Vorrichtungen (4S, 4C, 4P) zu veranlassen die Drossel-Öffnungsgrade auf den vorgegebenen kleinen Wert (T0) zu setzen, **dadurch**
**gekennzeichnet dass**
die Fern-Steuer-Vorrichtung (2) Elektronik-Steuer-Vorrichtungen (10S, 10C, 10P) umfasst, die an einer Fern-Steuer-Vorrichtungs-Seite miteinander kommunizieren können, entsprechend zu der gleichen Anzahl von Elektronik-Steuer-Vorrichtungen (4S, 4C, 4P) an der Brenn-Kraft-Maschine mit innerer Verbrennungs-Seite, und die Elektronik-Steuer-Vorrichtungen (4S, 4C, 4P) sind konfiguriert, um das Abnormalitäts-Signal (14) an die Fern-Steuer-Vorrichtung (2) auszugeben, wobei die Fern-Steuer-Vorrichtung (2) konfiguriert ist, um das Abnormalitäts-Signal (14) zu übertragen, oder den vorhergesetzten kleinen Wert (T0) für die Drosselöffnung als einen neuen Ziel-Öffnungs-Wert für die Elektronik-Steuer-Vorrichtungen (4S, 4C, 4P) der anderen normal arbeitenden Maschinen zu setzen, um die jeweiligen Elektronik-Steuer-Vorrichtungen (4S, 4C, 4P) zu veranlassen, die Drossel-Öffnungsgrade auf dem vorhergesetzten kleinen Wert (T0) zu setzen.

2. Antriebs-System gemäß Anspruch 1, **dadurch gekennzeichnet dass** die Elektronik-Steuer-Vorrichtungen (4S, 4C, 4P) an der Brenn-Kraft-Maschine mit innerer Verbrennungs-Seite, die an jeder Brenn-Kraft-Maschine mit innerer Verbrennung installiert sind, konfiguriert sind, um einen Betrieb eines Drossel-Aktuators (5) der jeweiligen Brenn-Kraft-Maschine mit innerer Verbrennung für jede Antriebs-Einheit, einen Betrieb eines Schalt-Aktuators (6), und einen Zünd-Zeit-Punkt einer Zündkerze (8) der Maschinen zu steuern.

3. Antriebs-System gemäß Anspruch 2, **dadurch gekennzeichnet dass** die Elektronik-Steuer-Vorrichtungen (4S, 4C, 4P) an der Brenn-Kraft-Maschine mit innerer Verbrennungs-Seite jeweils eine Aktuatur-Steuer-Vorrichtung (7), um den Betrieb des Drossel-Aktuators (5) und den Betrieb des Schalt-Aktuators (6) zu steuern, und eine Maschinen-Steuer-Vorrichtung (9), um den Zünd-Zeit-Punkt einer Zündkerze (8) zu steuern, haben, und wenn die Aktuator-Steuer-Vorrichtung (7) ein Abnormalitäts-Signal (14) aufnimmt, sind der Ziel-Drossel-Öffnungsgrad entsprechend zu einem Ziel-Drossel-Öffnungsgrad-Signal (15) und ein Drossel-Öffnungsgrad von einer abnormal arbeitenden Brenn-Kraft-Maschine mit innerer Verbrennung verglichen, und der Drossel-Aktuator (5) ist betätigt, um einen Drossel-Öffnungsgrad einer abnormal arbeitenden Brenn-Kraft-Maschine mit innerer Verbrennung auf den Ziel-Drossel-Öffnungsgrad zu ändern, wenn die zwei Drossel-Öffnungsgrade unterschiedlich sind.

4. Antriebs-System gemäß Anspruch 3, **dadurch gekennzeichnet, dass** wenn eine Abnormalität wie eine Überhitzung und Öl-Reduktion in einer Brenn-Kraft-Maschine mit innerer Verbrennung in irgendeiner Antriebs-Einheit auftritt, ist die Elektronik-Steuer-Vorrichtung (4S, 4C, 4P) an der Brenn-Kraft-Maschine mit innerer Verbrennungs-Seite, die mit der abnormal arbeitenden Brenn-Kraft-Maschine mit innerer Verbrennung verbunden ist, konfiguriert, um die Abnormalität zu erfassen und das Abnormalitäts-Signal (14) auszugeben, um ein Ziel-Drossel-Öffnungsgrad-Signal (15) zu dem jeweiligen Drossel-Aktuator zu übertragen, um einen Drossel-Öffnungsgrad der abnormal arbeitenden Brenn-Kraft-Maschine mit innerer Verbrennung auf einen bestimmten kleinen Öffnungsgrad zu setzen, und um das Abnormalitäts-Signal (14) auf die entsprechende Elektronik-Steuer-Vorrichtung (10S, 10C, 10P) an der Fern-Steuer-Vorrichtungs-Seite einer normal arbeitenden Brenn-Kraft-Maschine mit innerer Verbrennung über die Elektronik-Steuer-Vorrichtung (10S, 10C, 10P) an der Fern-Steuer-Vorrichtungs-Seite einer abnormal arbeitenden Brenn-Kraft-Maschine mit innerer Verbrennung zu übertragen, und wobei die Elektronik-Steuer-Vorrichtung (10S, 10C, 10P) an einer Fern-Steuer-Vorrichtungs-Seite der normal arbeitenden Brenn-Kraft-Maschine mit innerer Verbrennung, die ein Abnormalitäts-Signal (14) aufnimmt, das Ziel-Drossel-Öffnungsgrad-Signal (15) oder das Abnormalitäts-Signal (14) zu einer Elektronik-Steuer-Vorrichtung (4S, 4C, 4P) an der Brenn-Kraft-Maschine mit innerer Verbrennungs-Seite der normal arbeitenden Brenn-Kraft-Maschine mit innerer Verbrennung überträgt, wodurch Drehzahlen einer abnormal arbeitenden Brenn-Kraft-Maschine mit innerer Verbrennung und der normal arbeitenden Brenn-Kraft-Maschine mit inneren Verbrennungen auf einen bestimmt niedrigen Wert reduziert sind.

5. Antriebs-System gemäß Anspruch 3 oder 4, **dadurch gekennzeichnet dass**, wenn das Abnormalitäts-Signal (14) erfasst ist, ist eine Elektronik-Steuer-Vorrichtung 10S, 10C, 10P) an der Fern-Steuer-Vorrichtungs-Seite konfiguriert um einen Ziel-Drossel-Öffnungsgrad und einen Drossel-Öffnungsgrad einer normal arbeitenden Brenn-Kraft-Maschine mit innerer Verbrennung zu vergleichen, und wenn die zwei Drossel-Öffnungsgrade unterschiedlich sind, ein Ziel-Drossel-Öffnungsgrad-Signal (15) zu der Aktuator-Steuer-Vorrichtung (7) zu übertragen, um einen Drossel-Öffnungsgrad auf den Ziel-Drossel-Öffnungsgrad zu setzen, sodass die Aktuator-Steuer-Vorrichtung (7) den Drossel-Aktuator (5) betätigt, um einen Drossel-Öffnungsgrad einer normal arbeitenden Brenn-Kraft-Maschine mit innerer Verbrennung auf den Ziel-Drossel-Öffnungsgrad zu ändern.

6. Antriebs-System gemäß einem der Ansprüche 3 bis 5, **dadurch gekennzeichnet dass**, wenn das Abnormalitäts-Signal (14) empfangen ist, ist eine Elektronik-Steuer-Vorrichtung (10S, 10C, 10P) an der Fern-Steuer-Vorrichtungs-Seite konfiguriert, um einen Warn-Buzzer (13) zu betätigen, der in der Fern-Steuer-Vorrichtung (2) oder in der Umgebung derselben installiert ist, und das Ziel-Drossel-Öffnungsgrad-Signal (15) ist konfiguriert um eine Drehzahl der Brenn-Kraft-Maschine mit innerer Verbrennung zu steuern.

7. Antriebs-System gemäß einem der Ansprüche 3 bis 6, **dadurch gekennzeichnet, dass** Aufhebungs-Bedingungen um einen beschränkten Modus-Zustand des Drossel-Aktuators (5) aufzuheben, der das Abnormalitäts-Signal (14) empfangen hat, sind eine Lösung von einer Abnormalität einer Brenn-Kraft-Maschine mit innerer Verbrennung, bewirkt durch das Abnormalitäts-Signal und dem Betätigungs-Hebel (1R, 1L), der in der Neutral-Position oder in einer Niedrig-Geschwindigkeits-Position, entsprechend zu dem Ziel-Drossel-Öffnungsgrad, positioniert ist.

8. Antriebs-System gemäß einem der Ansprüche 3 bis 7, **dadurch gekennzeichnet dass** die Aktuator-Steuer-Vorrichtung (7) konfiguriert ist um den Schalt-Aktuator (6) zu betätigen, um ein Schalten von einer abnormal arbeitenden Brenn-Kraft-Maschine mit innerer Verbrennung zu der Neutral-Position aufgrund des Abnormalitäts-Signals zu setzen, wenn das Abnormalitäts-Signal (14) empfangen wurde.

9. Antriebs-System gemäß einem der Ansprüche 1 bis 9, **dadurch gekennzeichnet dass** die Antriebs-Einheiten Vortriebs-Einheiten (24S, 24C, 24P) sind, die jeweils eine Brenn-Kraft-Maschine mit innerer Verbrennung umfassen, die in einem Boot installiert sind.

10. Ein Boot das ein Antriebs-System gemäß einem der Ansprüche 1 bis 9 umfasst.

11. Steuer-Verfahren für ein Vortriebs-System eines Boots, dieses Antriebs-System umfasst mehrere Antriebs-Einheiten, jede Antriebs-Einheit hat eine Brenn-Kraft-Maschine mit innerer Verbrennung, und eine Steuer-Vorrichtung (2), die in der Lage ist, ein Signal für jede Brenn-Kraft-Maschine mit innerer Verbrennung zu übertragen, um einen Ziel-Antriebs-Zustand auszuführen, das Verfahren umfasst die Schritte von:
Überwachen eines Antriebs-Zustands von jeder Maschine,
Erfassen eines abnormalen Betriebs-Zustands von einer Maschine, um ein Abnormalitäts-Signal (14) auszugeben.
Setzen eines Öffnungsgrades einer jeweiligen Drossel der Maschine, die in dem Abnormal-Betriebs-Zustand ist, auf einen vorhergesetzten kleinen Wert (T0), wobei das Abnormalitäts-Signal (14) zu den anderen normal arbeitenden Maschinen übertragen ist, um die Drossel-Öffnungsgrade auf den vorhergesetzten Wert (T0) zu setzen, **gekennzeichnet durch**
Übertragen des Abnormalitäts-Signals (14) zu der Fern-Steuer-Vorrichtung (2) und Übertragen des Abnormalitäts-Signals (14) oder des vorhergesetzten kleinen Werts (T0) für die Drosselöffnung als ein neuer Ziel-Öffnungs-Wert durch die Fern-Steuer-Vorrichtung (2) zu den anderen normal arbeitenden Maschinen, um den Drossel-Öffnungsgrad auf den vorhergesetzten kleinen Wert (T0) zu setzen.

12. Softwareprogramm für ein Antriebs-System gemäß einem der Ansprüche 1 bis 9, **dadurch gekennzeichnet dass** das Software-Programm ein Drossel-Beschränkungs-Modul (M) beinhaltet, das in der Lage ist, Steuerung in die Elektronik-Steuer-Vorrichtungen (4S, 4C, 4P) von den Brenn-Kraft-Maschinen mit innerer Verbrennung der Antriebs-Einheiten auszuführen, um eine Drehzahl der Brenn-Kraft-Maschine mit innerer Verbrennung durch Einstellen eines Drossel-Öffnungsgrades zu reduzieren.

## Revendications

1. Système d'entraînement comprenant :
de multiples unités d'entraînement, chaque unité d'entraînement comportant un moteur à combustion interne, et un dispositif de commande électronique (4S, 4C, 4P) ; et
un dispositif de télécommande (2) capable de transmettre un signal pour chaque moteur à combustion interne afin d'exécuter un état d'entraînement cible,
dans lequel les dispositifs de commande électronique (4S, 4C, 4P) sur un côté moteur à combustion interne sont configurés pour surveiller un état d'entraînement des moteurs respectifs,
dans lequel les dispositifs de commande (4S, 4C, 4P) sont configurés pour détecter un état de fonctionnement anormal, pour envoyer un signal d'anomalie (14), et pour régler un degré d'ouverture de l'accélérateur respectif du moteur en état de fonctionnement anormal à une faible valeur préétablie (T0), dans lequel le signal d'anomalie (14) est transmis aux dispositifs de commande électronique (4S, 4C, 4P) des autres moteurs fonctionnant normalement pour commander aux dispositifs de commande électronique respectifs (4S, 4C, 4P) de régler les degrés d'ouverture d'accélérateur à la faible valeur préétablie (T0), **caractérisé en ce que**
le dispositif de télécommande (2) comprend des dispositifs de commande électronique (10S, 10C, 10P), qui peuvent communiquer entre eux, sur un côté dispositif de télécommande correspondant au même nombre de dispositifs de commande électronique (4S, 4C, 4P) sur le côté moteur à combustion interne, et
les dispositifs de commande électronique (4S, 4C, 4P) sont configurés pour envoyer un signal d'anomalie (14) au dispositif de télécommande (2), dans lequel le dispositif de télécommande (2) est configuré pour transmettre le signal d'anomalie (14), ou la faible valeur préétablie (T0) pour l'ouverture d'accélérateur comme nouvelle valeur d'ouverture cible aux dispositifs de commande électronique (4S, 4C, 4P) des autres moteurs fonctionnant normalement pour commander aux dispositifs de commande électronique respectifs (4S, 4C, 4P) de régler les degrés d'ouverture d'accélérateur à la faible valeur préétablie (T0).

2. Système d'entraînement selon la revendication 1, **caractérisé en ce que** les dispositifs de commande électronique (4S, 4C, 4P) sur un côté moteur à combustion interne installés sur chaque moteur à combustion interne sont configurés pour commander l'actionnement d'un actionneur d'accélérateur (5) du moteur à combustion interne respectif pour chaque unité d'entraînement, l'actionnement d'un actionneur de changement (6), et le réglage d'allumage d'une bougie d'allumage (8) des moteurs.

3. Système d'entraînement selon la revendication 2, **caractérisé en ce que** les dispositifs de commande électronique (4S, 4C, 4P) sur le côté moteur à combustion interne comportent un dispositif de commande d'actionneur (7) pour commander respectivement l'actionnement de l'actionneur d'accélérateur (5) et l'actionnement de l'actionneur de changement (6) et un dispositif de commande de moteur (9) pour commander le réglage d'allumage d'une bougie d'allumage (8), et quand le dispositif de commande d'actionneur (7) reçoit le signal d'anomalie (14), un degré d'ouverture d'accélérateur cible correspondant à un signal de degré d'ouverture d'accélérateur cible (15) et un degré d'ouverture d'accélérateur d'un moteur à combustion interne fonctionnant anormalement sont comparés, et un actionneur d'accélérateur (5) est commandé pour changer un degré d'ouverture d'accélérateur d'un moteur à combustion interne fonctionnant anormalement en un degré d'ouverture d'accélérateur cible si les deux degrés d'ouverture d'accélérateur sont différents.

4. Système d'entraînement selon la revendication 3, **caractérisé en ce que,** quand une anomalie telle qu'une surchauffe et une perte d'huile dans un moteur à combustion interne se produit dans une unité d'entraînement quelconque, le dispositif de commande électronique (4S, 4C, 4P) sur le côté moteur à combustion interne connecté au moteur à combustion interne fonctionnant anormalement est configuré pour détecter l'anomalie et pour sortir le signal d'anomalie (14), pour transmettre un signal de degré d'ouverture d'accélérateur cible (15) à l'actionneur d'accélérateur respectif (5) afin de régler un degré d'ouverture d'accélérateur du moteur à combustion interne fonctionnant anormalement à un certain faible degré d'ouverture, et pour transmettre le signal d'anomalie (14) au dispositif de commande électronique correspondant (10S, 10C, 10P) côté dispositif de télécommande d'un moteur à combustion interne fonctionnant normalement via le dispositif de commande électronique (10S, 10C, 10P) côté dispositif de télécommande d'un moteur à combustion interne fonctionnant anormalement, et dans lequel le dispositif de commande électronique (10S, 10C, 10P) côté dispositif de télécommande du moteur à combustion interne fonctionnant normalement, lors de la réception du signal d'anomalie (14), transmet le signal de degré d'ouverture d'accélérateur cible (15) ou le signal d'anomalie (14) à un dispositif de commande électronique (4S, 4C, 4P) côté moteur à combustion interne du moteur à combustion interne fonctionnant normalement, moyennant quoi les vitesses de rotation d'un moteur à combustion interne fonctionnant anormalement et des moteurs à combustion interne fonctionnant normalement sont réduites à une certaine basse vitesse.

5. Système d'entraînement selon la revendication 3 ou 4, **caractérisé en ce que** lors de la réception du signal d'anomalie (14), un dispositif de commande électronique (10S, 10C, 10P) côté dispositif de télécommande est configuré pour comparer un degré d'ouverture d'accélérateur cible et un degré d'ouverture d'accélérateur d'un moteur à combustion interne fonctionnant normalement, et si les deux degrés d'ouverture d'accélérateur sont différents, pour transmettre un signal de degré d'ouverture d'accélérateur cible (15) au dispositif de commande d'actionneur (7) afin de régler un degré d'ouverture d'accélérateur au degré d'ouverture d'accélérateur cible, de telle sorte que le dispositif de commande d'actionneur (7) commande l'actionneur d'accélérateur (5) pour changer un degré d'ouverture d'accélérateur d'un moteur à combustion interne fonctionnant normalement au degré d'ouverture d'accélérateur cible.

6. Système d'entraînement selon l'une des revendications 3 à 5, **caractérisé en ce que** quand le signal d'anomalie (14) est reçu, un dispositif de commande électronique (10S, 10C, 10P) côté dispositif de télécommande est configuré pour déclencher un vibreur d'avertissement (13) installé dans le dispositif de télécommande (2) ou à proximité de celui-ci, et le signal de degré d'ouverture d'accélérateur cible (15) est configuré pour commander une vitesse de rotation d'un moteur à combustion interne.

7. Système d'entraînement selon l'une des revendications 3 à 6, **caractérisé en ce que** les conditions d'annulation pour annuler un état de mode restreint de l'actionneur d'accélérateur (5) ayant reçu le signal d'anomalie (14) sont une solution d'une anomalie d'un moteur à combustion interne provoquant le signal d'anomalie (14) et le levier d'actionnement (1R, 1L) placé en position neutre ou en position basse vitesse correspondant à un degré d'ouverture d'accélérateur cible.

8. Système d'entraînement selon l'une des revendications 3 à 7, **caractérisé en ce que** le dispositif de commande d'actionneur (7) est configuré pour actionner l'actionneur de changement (6) pour régler l'état d'un moteur à combustion interne fonctionnant anormalement à une position neutre sur base du signal d'anomalie (14) après avoir reçu le signal d'anomalie (14).

9. Système d'entraînement selon l'une des revendications 1 à 9, **caractérisé en ce que** les unités d'entraînement sont des unités de propulsion (24S, 24C, 24P), comprenant respectivement un moteur à combustion interne, installées sur le bateau.

10. Bateau comprenant un système d'entraînement selon l'une des revendications 1 à 9.

11. Procédé de commande pour un système d'entraînement de propulsion d'un bateau, ledit système d'entraînement comprenant de multiples unités d'entraînement, chaque unité d'entraînement comportant un moteur à combustion interne, et un dispositif de télécommande (2) capable de transmettre un signal pour chaque moteur à combustion interne afin d'exécuter un état d'entraînement cible, le procédé comprenant les étapes suivantes :
surveillance d'un état d'entraînement de chaque moteur,
détection d'un état de fonctionnement anormal d'un moteur, pour envoyer un signal d'anomalie (14),
réglage du degré d'ouverture d'un accélérateur respectif du moteur en état de fonctionnement anormal à une faible valeur préétablie (T0), dans lequel le signal d'anomalie (14) est transmis aux autres moteurs fonctionnant normalement pour régler les degrés d'ouverture d'accélérateur à la faible valeur préétablie (T0), **caractérisé par**
la transmission du signal d'anomalie (14) au dispositif de télécommande (2), et la transmission du signal d'anomalie (14) ou de la faible valeur préétablie (T0) pour l'ouverture d'accélérateur comme nouvelle valeur d'ouverture cible par le dispositif de télécommande (2) aux autres moteurs fonctionnant normalement pour régler les degrés d'ouverture d'accélérateur à la faible valeur préétablie (T0).

12. Logiciel pour système d'entraînement selon l'une des revendications 1 à 9, **caractérisé en ce que** le logiciel comprend un module de restriction d'accélérateur (M) capable d'exécuter une commande dans les dispositifs de commande électronique (4S, 4C, 4P) des moteurs à combustion interne des unités d'entraînement pour réduire la vitesse de rotation du moteur à combustion interne en ajustant un degré d'ouverture d'accélérateur.
